# EUROPÄISCHE PATENTANMELDUNG

(11) **EP 4 803 965 A1**
(43) Veröffentlichungstag der Anmeldung: **09.09.2026**
(21) Anmeldenummer: 26152807.9
(22) Anmeldetag: 20.01.2026
(51) Int. Cl.: G05B 13/02, G05B 17/02, G05B 19/042, G05B 19/418, G05B 23/02

(54) **SYSTEM UND VERFAHREN ZUM AUTOMATISCHEN BEHEBEN VON ABWEICHUNGEN AN EINER MASCHINENLINIE**

(30) Priorität: 03.03.2025 DE 102025107962
(71) Anmelder: KRONES Aktiengesellschaft, 93073 Neutraubling (DE)
(72) Erfinder: Micko, Christoph, 93073 Neutraubling (DE)
(74) Vertreter: Grünecker Patent- und Rechtsanwälte PartG mbB

(57) **Zusammenfassung**

Die hierin beschriebene Erfindung betrifft ein computerimplementiertes Verfahren, ein System und ein computerlesbares Speichermedium zum automatischen Beheben von Abweichungen an einer Maschinenlinie, insbesondere einer Maschinenlinie zum Abfüllen und Verpacken von Lebensmitteln und/oder Getränken. Gemäß Ausführungsformen werden mittels einer Anlagensteuerung ein Ist-Zustand der Maschinenlinie überwacht. Dadurch kann erkannt werden, wenn eine Abweichung des überwachten Ist-Zustands von einem Optimal-Zustand der Maschinenlinie auftritt. Die Anlagensteuerung ermittelt eine entsprechende Reaktions-Maßnahme, die zum Beheben der Abweichung geeignet ist und leitet diese an eine Large-Action-Model- (LAM-) Einheit weiter, die einen Steuerbefehl aus der Reaktions-Maßnahme ableitet und an der Maschinenlinie ausführt, um die Abweichung zu beheben oder zu minimieren. Eingriffsinformationen werden dann an eine Large-Language-Model- (LLM-) Einheit übertragen, die diese verarbeitet und gesprächseröffnend eine entsprechende Meldung über die Abweichung und die Reaktions-Maßnahme an einen Bediener ausgibt.

## Beschreibung

Die Erfindung betrifft Verfahren, Systeme und Computerlesbare Speichermedien zum automatischen Beheben von Abweichungen an einer Maschinenlinie, insbesondere einer Maschinenlinie zum Abfüllen und Verpacken von Lebensmitteln und/oder Getränken.

Fertigungsanlagen und Maschinenlinien umfassen in der Regel eine Vielzahl von Maschinen, die miteinander vernetzt und funktionell gekoppelt sind und in einem abgestimmten Zusammenspiel Produkte herstellen, verpacken oder abfüllen. Aufgrund der hohen Komplexität dieser Anlagen ist es wichtig, den Betriebszustand der Maschinen kontinuierlich zu überwachen, um eine hohe Produktionsqualität sicherzustellen und kostenintensive Stillstände oder Defekte zu vermeiden.

Die Überwachung von Maschinenlinien basiert in der Regel vor allem auf der Analyse von Sensordaten, die von den einzelnen Maschinen erfasst werden. Die Sensoren messen physikalische Größen wie Temperatur, Druck, Geschwindigkeit, Stromaufnahme oder Schwingungen. Diese erfassten Daten werden in Echtzeit mit vordefinierten Sollwerten verglichen. Dieser Soll-Ist-Vergleich dient dazu, Abweichungen vom Normalbetrieb zu erkennen und entsprechende Störungsmeldungen auszugeben.

Bei der Detektion von Abweichungen wird in der Regel eine vorgefertigte Störungsmeldung generiert, die auf festen Regeln und Schwellenwerten basiert. Solche Störungsmeldungen können beispielsweise Hinweise auf mechanische oder elektrische Probleme, Überschreitungen von Grenzwerten oder andere unerwünschte Betriebszustände liefern. Typischerweise erfolgt die Darstellung der Störungsmeldungen auf den Bedienoberflächen der Maschinen oder an einem Computer, der von Bedienern zur Steuerung der Maschinenlinie verwendet wird. Die Meldungen werden den Bedienern oder Wartungstechnikern angezeigt, die dann geeignete Maßnahmen ergreifen können.

Obwohl dieses System der Überwachung grundsätzlich effektiv ist, gibt es auch Einschränkungen und Probleme dabei. Eine Herausforderung besteht darin, dass die verwendeten Regeln und Schwellenwerte starr und oft nur begrenzt anpassungsfähig sind. Dadurch können dynamische oder komplexe Betriebszustände nicht immer adäquat berücksichtigt werden. Insbesondere bei Maschinenlinien, die einer hohen Variabilität unterliegen, etwa durch wechselnde Produkte oder unvorhergesehene Betriebsbedingungen, kann dies zu Fehlalarmen oder zu einer verspäteten Erkennung von tatsächlichen Problemen führen.

Ein weiteres Problem besteht darin, dass die vorgefertigten Störungsmeldungen oft nur begrenzte Informationen über die Ursachen von Abweichungen liefern. Dies kann dazu führen, dass Bediener und Wartungspersonal viel Zeit auf die Fehlersuche verwenden müssen, bevor sie eine geeignete Gegenmaßnahme ergreifen können. Die Effizienz der Fehlerbehebung wird dadurch erheblich beeinträchtigt, was insbesondere bei hoch automatisierten und zeitkritischen Produktionsprozessen nachteilig ist.

Es besteht daher Bedarf für verbesserte Verfahren und System zum automatischen Beheben von Abweichungen an einer Maschinenlinie, insbesondere einer Maschinenlinie zum Abfüllen und Verpacken von Lebensmitteln und/oder Getränken.

Die Aufgabe wird erfindungsgemäß durch ein Computerimplementiertes Verfahren gemäß Anspruch 1, ein System gemäß Anspruch 7 und ein Computerlesbares Speichermedium gemäß Anspruch 9 gelöst. Ausführungsformen und Weiterbildungen sind in den Unteransprüchen erfasst.

Eine Ausführungsform betrifft ein computerimplementiertes Verfahren zum automatischen Beheben von Abweichungen an einer Maschinenlinie, insbesondere einer Maschinenlinie zum Abfüllen und Verpacken von Lebensmitteln und/oder Getränken. Das Verfahren umfasst die Überwachung, mittels einer Anlagensteuerung, eines Ist-Zustands der Maschinenlinie. Dabei wird ein oder mehrere Parameter der Maschinenlinie überwacht, um zu erkennen, ob/dass eine Abweichung des überwachten Ist-Zustands von einem Optimal-Zustand der Maschinenlinie auftritt. Die Anlagensteuerung ermittelt daraus eine Reaktions-Maßnahme, die zum Beheben der Abweichung geeignet ist. Eine Large-Action-Model- (LAM), -Einheit leitet daraus einen oder mehrere Steuerbefehl ab und führt diese an der Maschinenlinie aus, um die Abweichung zu beheben oder zu minimieren. Die Eingriffsinformationen werden dann von der LAM-Einheit an eine Large-Language-Model-(LLM-) Einheit gesendet und von dieser verarbeitet, um eine gesprächseröffnende Meldung über die Abweichung und die Reaktions-Maßnahme an den Bediener zu senden.

Weitere Ausführungsformen betreffen ein entsprechendes System und ein entsprechendes computerlesbares Speichermedium.

Beispielhafte Aspekte der Erfindung sind in den Zeichnungen dargestellt. Es zeigen:
**Figur 1****:** ein Diagramm, das ein System mit einer Maschinenlinie zeigt, in dem Ausführungsformen der Erfindung implementiert werden;
**Figur 2****:** ein Blockdiagramm, das eine Implementierung der Erfindung veranschaulicht;
**Figur 3****:** eine beispielhafte Anlagenkonfiguration für PET-Behälter und Klebegebinde;
**Figur 4****:** eine beispielhafte Anlagenkonfiguration für PET-Behälter und Schrumpfpacker;
**Figur 5****:** eine beispielhafte Anlagenkonfiguration für Dosen oder Glasflaschen; und
**Figur 6****:** eine beispielhafte Anlagenkonfiguration für Dosen.

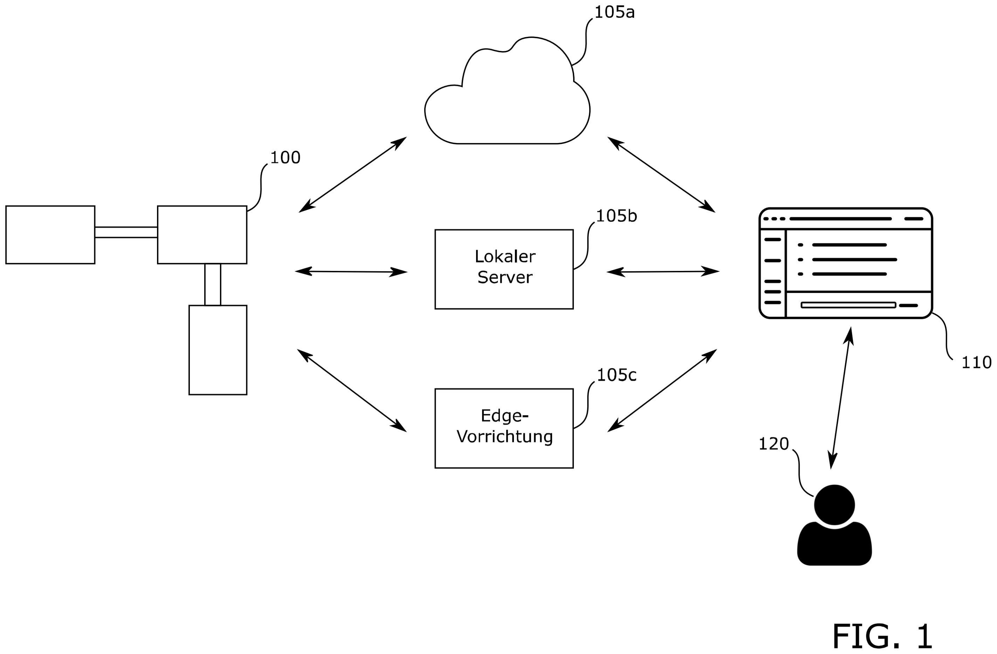

Figur 1 zeigt eine beispielhafte Architektur einer Maschinenlinie 100 und verschiedener Komponenten für die Mensch-Maschine-Interaktion gemäß Ausführungsformen der Erfindung.

Ein Ziel der Erfindung ist es, eine verbesserte Mensch-Maschine-Interaktion mittels einer oder mehrerer Kl-Implementierungen bereitzustellen. Figur 1 zeigt eine beispielhafte Architektur, in der die Ausführungsformen der Erfindung implementiert werden können. Die wesentlichen Schritte der Ausführungsformen geschehen in der Regel in einer Computervorrichtung 105, die zwischen der Maschinenlinie 100 selbst und dem Bediener 120 fungiert und diesem Bediener 120 eine Benutzerschnittstelle 110 bereitstellt, wie beispielsweise ein HMI.

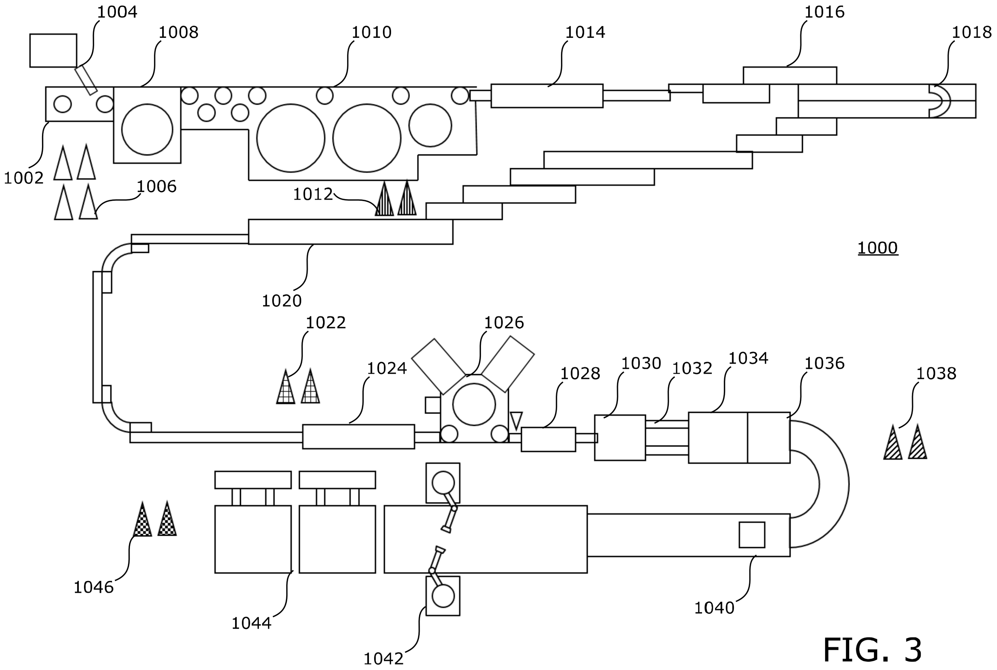

Die Maschinenlinie 100 kann beispielsweise eine Maschinenlinie zum Abfüllen und Verpacken von Lebensmitteln und/oder Getränken sein, wie in den Figuren 3 bis 6 weiter beschrieben.

Die Computervorrichtung 105 kann beispielsweise ein Cloudsystem 105a, ein in der Nähe der Maschinenlinie 100 befindlicher lokaler Server 105b und/oder eine Edge-Vorrichtung 105c sein und kann die Funktionalität umfassen.

Die beispielhafte Computervorrichtung 105 umfasst eine Vielzahl von funktionalen Komponenten, die zusammenwirken, um die Ausführung der beschriebenen Erfindung zu ermöglichen. Die Computervorrichtung 105 umfasst beispielsweise einen Speicher, der dazu dient, Daten und Anweisungen zu speichern, die zur Durchführung der Erfindung erforderlich sind. Der Speicher kann ein flüchtiges und/oder nichtflüchtiges Speichermedien umfassen, wie z.B. RAM, ROM, Festplattenlaufwerke oder Solid-State-Speicher.

Die Verarbeitung der Daten und die Ausführung der Anweisungen kann durch eine zentrale Verarbeitungseinheit oder CPU erfolgen, die als Hauptprozessor der Computervorrichtung 105 dient. Die CPU ist in der Lage, komplexe Berechnungen und logische Entscheidungen durchzuführen, die für die Funktion der Erfindung wesentlich sind. Sie kann als Einzelprozessor oder als Mehrkernprozessor ausgeführt sein, um eine höhere Verarbeitungseffizienz zu gewährleisten. Neben der CPU können auch eine oder mehrere Grafikverarbeitungseinheiten (GPUs) vorgesehen sein, da typischerweise viele Kl-Modelle auf solchen GPUs oder zukünftig auch auf speziellen Neural Prozessoren laufen. Es sind daher neben einer klassischen CPU auch weitere Prozessoren denkbar.

Das HMI 110 kann sowohl aus hardwarebasierten Elementen wie Tastaturen, Touchscreens oder physischen Schaltern als auch aus softwarebasierten Schnittstellen bestehen, die über grafische Benutzeroberflächen, bereitgestellt werden. Diese Schnittstelle dient dazu, Eingaben vom Bediener 120 zu empfangen und Ausgaben in einer für den Bediener 120 verständlichen Form bereitzustellen.

Zur Kommunikation mit externen Geräten oder Netzwerken kann die Computervorrichtung 105 mit einem Kommunikationsmodul ausgestattet sein, welches kabelgebundene oder drahtlose Verbindungen unterstützen kann, beispielsweise über Ethernet, WLAN, Bluetooth oder Mobilfunkstandards. Das Kommunikationsmodul ermöglicht den Datenaustausch zwischen der Computervorrichtung 105 und anderen Systemen, wie etwa der Maschinenlinie 100 selbst, was insbesondere bei vernetzten Anwendungen oder cloudbasierten Diensten von Bedeutung ist.

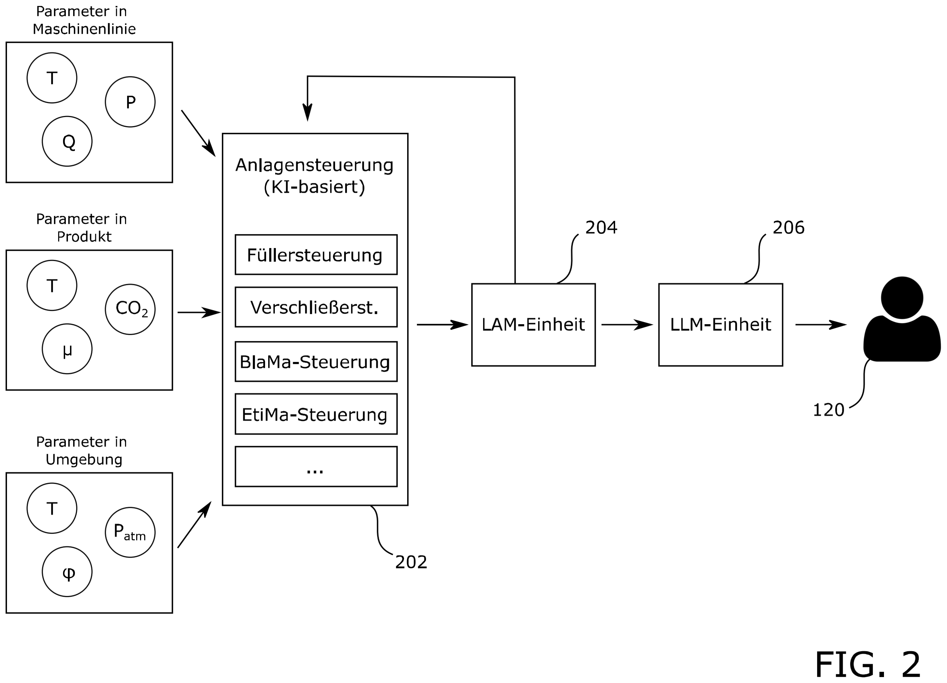

Auf der Computervorrichtung 105 wird eine oder mehrere Kl-Implementierungen ausgeführt, wie in Bezug auf Figur 2 weiter gezeigt, die eine Implementierung der Erfindung veranschaulicht.

Gemäß Ausführungsformen werden Daten der Maschinenlinie 100 und gegebenenfalls Informationen zu dem zu verarbeitenden Produkt (ggf. auch Umgebungsbedingungen) einer KI bereitgestellt, die beispielsweise Teil der Anlagensteuerung ist. Die Maschinenlinie 100 hat in der Regel einen Optimalzustand oder Soll-Zustand. Dieser Optimalzustand ergibt sich beispielsweise aus Daten (z.B. Sensorwerten, Produktdaten, Umgebungsbedingungen), die sich als Trainingsdaten verwenden lassen, mit denen die KI (d.h. ein neuronales Netzwerk) trainiert wurde.

Das neuronale Netzwerk wird dabei so trainiert, dass es später im laufenden Betrieb der Maschinenlinie 100 die eingehenden Daten auswerten und interpretieren kann. Im Idealfall kann das neuronale Netz (falls nötig) Maßnahmen einleiten und in die Maschinen-/Anlagensteuerung eingreifen.

Wie in der weiteren Beschreibung noch ausführlicher dargelegt, können die ausgewerteten und interpretierten Daten der Maschinenlinie 100 dann mittels einem Large Language Model (LLM) die Basis für generierte Texte sein, die dem Bediener 120 als angepasste Zustandsmeldung der Maschinenlinie 100 ausgegeben wird.

Die KI der Anlagensteuerung kann somit mittels der generierten Texte des LLM proaktiv und von sich aus gesprächseröffnend auf den Bediener 120 zugehen. Dafür kann beispielsweise eine Nachricht (auch Push-Benachrichtigung) auf dem der Maschinenlinie 100 zugeordneten HMI 110, wie beispielsweise einem Tablet, Smartphone oder Bediendisplay ausgegeben werden. Die so vom LLM generierte Benachrichtigung können auch direkt ein Dialogfeld umfassen, in dem der Bediener 120 Rückfragen an die KI stellen kann. Bei den Antworten berücksichtigt die KI den Kontext der Gründe aus denen die Benachrichtigung erstellt wurde.

Da moderne Maschinenlinien häufig selbstständig auf Störungen oder Abweichungen vom Soll-Zustand reagieren können, können gemäß Ausführungsformen diese Änderung in der Anlagensteuerung ebenfalls auf Basis der von der KI ausgewerteten und interpretierten Daten an ein Large-Action-Model (LAM) abgegeben werden. Dieses LAM kann dann aktiv in die Anlagensteuerung eingreifen. Das LLM berücksichtigt für die Generierung der Texte auch die Eingriffe in die Anlagensteuerung durch das LAM.

Figur 2 zeigt ein Blockdiagramm, in dem weitere Details des automatischen Behebens von Abweichungen an einer Maschinenlinie gezeigt sind. Die Anlagensteuerung 202 ist ein computergestütztes Steuersystem mittels dem die Maschinenlinie 100 gesteuert werden kann. Beispielhafte Steuerungsoperationen einer solchen Anlagensteuerung 202 betreffen eine Füllersteuerung, eine Verschließersteuerung, eine Blasmaschinensteuerung, eine Etikettiermaschinensteuerung usw. Grundsätzlich können auch mehr oder weniger Maschinen oder Module mittels der Anlagensteuerung 202 gesteuert werden als die hierin aufgezählten.

Die Anlagensteuerung 202 überwacht den Ist-Zustand der Maschinenlinie 100. Diese Überwachung umfasst das Überwachen von einem oder mehreren Parametern der Maschinenlinie 100. Dies geschieht beispielsweise mittels Sensoren und/oder durch Auslesen oder Empfangen von einem oder mehreren Maschinenzuständen von Maschinen in der Maschinenlinie 100.

Verschiedene beispielhafte Parameter der Maschinenlinie 100 sind auf der linken Seite von Figur 2 gezeigt. Es ist möglich, die Parameter in verschiedene Bereiche zu untergliedern, wie beispielsweise in Parameter in der Maschinenlinie 100, Parameter des Produkts oder Parameter in der Umgebung der Maschinenlinie 100, wie beispielsweise Umweltparameter. Beispiele für die Parameter umfassen Temperatur an einer Maschine der Maschinenlinie 100; Druck an einer Maschine der Maschinenlinie 100; Durchfluss an einer Maschine der Maschinenlinie 100; Temperatur eines abzufüllenden Getränke-Produkts; Viskosität (µ) eines abzufüllenden Getränke-Produkts; CO₂-Gehalt eines abzufüllenden Getränke-Produkts; Temperatur einer Umgebung der Maschinenlinie 100; Luftdruck (Pₐₜₘ) der Umgebung; und/oder Luftfeuchtigkeit (φ) der Umgebung der Maschinenlinie 100.

Gemäß Ausführungsformen kann die Anlagensteuerung 202 eine KI-Einheit umfassen, die beispielsweise ein neuronales Netz umfasst, das darauf trainiert ist, eingehende Daten von der Maschinenlinie 100 auszuwerten und die Abweichung vom Optimal-Wert zu erkennen.

Die Anlagensteuerung 202 (oder die dort implementierte KI) kann dann eine Abweichung des überwachten Ist-Zustands von einem Optimal-Zustand der Maschinenlinie 100 erkennen. Die Anlagensteuerung 202 kann dann eine entsprechende Reaktions-Maßnahme ermitteln, die zum Beheben der Abweichung geeignet ist.

Als veranschaulichendes Beispiel anhand einer Füllmaschine sei von einem Füller ausgegangen, der verschiedene Sensoren aufweist (beispielsweise Temperatursensoren, Drucksensoren, optische Sensoren, Durchflussmesser oder Informationen aus nachgelagerten Checkmaten) und von einem Produkt, das sich durch vorgegebene Werte kennzeichnet (CO2-Gehalt, Brix-Gehalt, Mischungsverhältnis Sirup-Wasser, Produkttemperatur, Viskosität).

Im Idealfall entsprechen alle Ist-Werte den vorgegebenen Soll-Werten und die Maschinenlinie 100 läuft auf maximaler Produktionsgeschwindigkeit bei beispielsweise 100.000 Behälter pro Stunde. In der Anlagensteuerung 202 kann ein Kl-Modell installiert sein (alternativ über Cloud 105a oder einem lokalen Server 105b oder einer Edge-Vorrichtung 105c), das vorab bei Inbetriebnahme der Maschinenlinie 100 auf die Soll-Werte dieser Maschinenlinie 100 trainiert wurde. Während des Betriebs der Maschinenlinie 100 werden eine Vielzahl von Sensordaten und/oder anderer Zustandsdaten der Maschinenlinie 100 an die Anlagensteuerung 202 mit der KI übertragen.

Die Anlagensteuerung 202 wertet die Daten aus und interpretiert sie. Beispielsweise vergleicht sie die Daten mit den Trainingsdaten. In einem möglichen Szenario stellt nun ein dem Füller nachgelagerter Checkmat fest, dass zu viel Schaum in den Flaschen entsteht und das abzufüllende Produkt (bzw. der Schaum des Produkts) über die Mündung der Flasche tritt. Zudem liefert ein Temperatursensor am Drehverteiler des Füllers einen erhöhten Temperaturwert. Die Anlagensteuerung 202 erkennt nun (z.B. mittels der Kl), dass ein Zusammenhang zwischen diesen Beobachtungen bestehen könnte. Die erhöhte Temperatur am Drehverteiler erwärmt das abzufüllende Produkt mehr als es sollte. Wenn das Produkt eine höhere Temperatur aufweist, neigt es mehr zum Aufschäumen bei der aktuellen Produktionsgeschwindigkeit. Daraus folgt, dass die Anlagenleistung reduziert werden muss, damit entweder das Produkt mit geringerer Abfüllgeschwindigkeit in die Flasche laufen kann, sich die Beruhigungszeit nach dem Füllvorgang verlängert oder eine Kombination davon.

Diese möglichen Reaktionsmaßnahmen werden dann an die Large-Action-Model-(LAM-) Einheit 204 gesendet. Die LAM-Einheit 204 leitet daraus einen oder mehrere Steuerbefehle aus der Reaktions-Maßnahme ab. Im obigen Beispiel kann die LAM-Einheit 204 in die Füllersteuerung eingreifen und den Output der Maschinenlinie 100 beispielsweise auf 75.000 Behälter pro Stunde reduzieren.

Die LAM-Einheit 204 führt also den einen oder die mehreren Steuerbefehle an der Maschinenlinie 100 aus, um die Abweichung zu beheben oder wenigstens zu minimieren. Weiterhin werden diese Eingriffsinformationen an eine Large-Language-Model- (LLM-) Einheit 206 gesendet, die diese Eingriffsinformationen verarbeitet. Die Verarbeitung durch die LLM-Einheit 206 umfasst eine Erzeugung einer Meldung über die Abweichung und die Reaktions-Maßnahme.

Gemäß Ausführungsformen umfassen die Eingriffsinformationen Informationen bezüglich der Abweichung vom Ist-Zustand, Informationen bezüglich der Reaktions-Maßnahme, und/oder Informationen bezüglich des abgeleiteten und durchgeführten einen oder mehrerer Steuerbefehle.

Die generierte Meldung, die dem Bediener 120 bereitgestellt wird, könnte beispielsweise lauten: *"Es wurde ein abweichendes Aufschäumverhalten des Produkts nach der Abfüllung erkannt. Eine Ursache dafür könnte eine erhöhte Temperatur am Drehverteiler sein. Die Anlagenleistung wurde temporär reduziert, um das Aufschäumverhalten positiv zu beeinflussen und ggf. die Reibungswärme am Drehverteiler zu reduzieren.".* Die Meldung kann eine Meldung in Text-, Bild-, Bewegtbild-, und/oder Audioformat oder eine Kombination daraus sein

Dadurch eröffnet die Anlagensteuerung 202 mittels dem von der LLM-Einheit 206 generierten Text selbst die Kommunikation mit dem Bediener 120 und enthält alle wichtigen Informationen aus den Sensordaten und Steuerungseingriffen der LAM-Einheit 204.

Gemäß weiterer Ausführungsformen können die durch die LLM-Einheit 206 ausgegebenen Benachrichtigungen auch Handlungsanweisungen für den Bediener 120 umfassen, die eine Reparaturanleitung umfassen.

Gemäß Ausführungsformen können die während der Produktion entstehenden Sensordaten als weitere Trainingsdaten für die Anlagensteuerung 202 genutzt werden, um beispielsweise innerhalb gewisser Maximaltoleranzen Abweichungen durch Verschleiß berücksichtigen zu können (und damit den Verschleiß erkennen und bis zu einem gewissen Grad zulassen zu können).

Die oben beschriebe Funktionalität kann auch Maschinenübergreifend in der Maschinenlinie 100 gegeben sein, um weitere Maschinen zu berücksichtigen, wenn eine Abweichung in einer ersten Maschine der Maschinenlinie auftritt.

Durch die Ausführungsformen der Erfindung wird eine selbstständige und flexible Maschinenlinie 100 ermöglicht, die die Möglichkeit bietet, bei Abweichungen vom Soll-Wert mit dem Bediener 120 in Kontakt zu treten und es erlaubt, Rückfragen über die Maschinenlinie 100 und deren Zustand zu stellen.

Im Folgenden werden die hierin genutzten Kl- und Computerimplementierungen grob beschrieben, so dass der Fachmann die Erfindung entsprechend implementieren und ausführen kann

Ein Large Language Model (LLM), wie es hierin beschrieben und verwendet wird, ist ein auf maschinellem Lernen basierendes System, das speziell darauf trainiert ist, Textdaten zu verarbeiten und zu generieren. Es nutzt neuronale Netzwerke, insbesondere tiefe neuronale Netzwerke, um die statistischen und semantischen Beziehungen zwischen Wörtern, Sätzen und Absätzen zu analysieren. Die Grundlage eines LLM besteht in der Regel aus einer Architektur wie dem Transformer-Modell, das in der Lage ist, Informationen über große Sequenzen hinweg effizient zu verarbeiten.

Ein wesentliches Merkmal eines LLM ist seine Trainingsphase, in der es auf einer großen Menge an Textdaten trainiert wird. Diese Daten stammen aus verschiedenen Quellen, wie beispielsweise wissenschaftlichen Artikeln, technischen Dokumentationen, Büchern oder Online-Inhalten. Während des Trainingsprozesses optimiert das Modell seine Gewichte und Parameter, um Vorhersagen über das nächste Wort in einer Textsequenz zu treffen, basierend auf den vorherigen Wörtern. Diese Technik wird als "Autoregressives Training" bezeichnet. Die Transformer-Architektur, die von den meisten LLMs verwendet wird, besteht aus mehreren Schichten von Selbstaufmerksamkeitsmechanismen (auch bekannt als Self-Attention) und Feedforward-Netzwerken. Der Selbstaufmerksamkeitsmechanismus ermöglicht es dem Modell, Beziehungen zwischen Wörtern in einem Kontext zu identifizieren, unabhängig davon, wie weit diese Wörter voneinander entfernt sind. Dies ist besonders wichtig, um semantische Zusammenhänge und syntaktische Strukturen in einem Text korrekt zu erfassen.

Nach Abschluss des Trainings kann das LLM verwendet werden, um verschiedene Aufgaben der natürlichen Sprachverarbeitung (Natural Language Processing, NLP) zu lösen. Dazu gehören unter anderem die automatische Textgenerierung, die Beantwortung von Fragen, die Zusammenfassung von Texten, die maschinelle Übersetzung und die Analyse von Textstimmungen. Die Vielseitigkeit eines LLMs ergibt sich aus seiner Fähigkeit, Muster und Strukturen in Textdaten zu erkennen und diese auf neue Kontexte anzuwenden. Um ein LLM in der spezifischen Anwendung hierin beschriebener Ausführungsformen einzusetzen, kann es entweder direkt verwendet oder zusätzlich auf einer kleineren, domänenspezifischen Datenmenge feinabgestimmt werden. Dieses "Fine-Tuning" ermöglicht es dem LLM, sich an die Anforderungen einer spezifischen Aufgabe bzw. der Dokumentation der Maschinenlinie 100 anzupassen. Dabei bleibt das Grundwissen des Modells erhalten, während gleichzeitig die Fähigkeit verbessert wird, Inhalte bezüglich der Maschinenlinie 100 zu verarbeiten.

Das LLM nimmt Eingaben in Form von Text, der in numerische Vektoren ("Token") umgewandelt wird, und verarbeitet diese durch mehrere Schichten des neuronalen Netzwerks. Die Ausgabe besteht ebenfalls aus numerischen Vektoren, die in lesbaren Text zurückkonvertiert werden. Durch die Verwendung spezieller Optimierungsverfahren und Rechenressourcen wie GPUs oder TPUs ist das Modell in der Lage, diese Berechnungen in vertretbarer Zeit durchzuführen.

Ein Large Action Model (LAM) ist ein auf maschinellem Lernen basierendes System, das darauf abzielt, komplexe Handlungsfolgen zu planen, zu steuern und zu optimieren. Im Gegensatz zu dem oben beschriebenen Large Language Model, das primär auf die Verarbeitung und Generierung von natürlicher Sprache spezialisiert ist, konzentrieren sich LAMs auf die Analyse und Ausführung von Aktionen in einer gegebenen Umgebung. Solche Modelle finden Anwendung in Bereichen wie Robotik, autonomes Fahren, Prozesssteuerung, sowie Entscheidungsfindung in dynamischen Systemen.

Die technologische Grundlage eines LAM beruht ebenfalls auf neuronalen Netzwerken, insbesondere solchen Architekturen, die für die Verarbeitung zeitlicher Abfolgen und dynamischer Zustände geeignet sind. Typischerweise nutzen LAMs Varianten von rekurrenten neuronalen Netzwerken (RNNs), Long Short-Term Memory-Netzwerken (LSTMs) oder Transformern, die speziell auf zeitliche Abhängigkeiten und Zustandsänderungen optimiert wurden. Dabei werden Sensordaten, Zustandsinformationen und Kontextdaten als Eingaben verwendet, um eine Reihe von Handlungen vorherzusagen und zu bewerten.

Ein Merkmal von LAMs ist ihre Fähigkeit zur Modellierung von Handlungsketten. Dabei analysiert das Modell nicht nur einzelne Aktionen, sondern berücksichtigt auch deren Konsequenzen in unterschiedlichen Situationen. Dabei lernt das Modell eine Strategie oder eine Richtlinie, um in bestimmten Umgebungen optimale Entscheidungen zu treffen. Ein Ansatz in diesem Zusammenhang ist die Verwendung von Reinforcement Learning (RL), bei dem das Modell durch Versuch und Irrtum lernt, welche Handlungen zu positiven Ergebnissen führen.

Während des Trainingsprozesses wird das LAM auf eine Vielzahl von Szenarien und Zustandsänderungen trainiert. Hierbei werden Umgebungen simuliert, in denen das Modell unterschiedliche Handlungsoptionen ausprobiert. Der Trainingserfolg wird durch eine Belohnungsfunktion bewertet, die positive Ergebnisse belohnt und negative Ergebnisse bestraft. Auf diese Weise optimiert das Modell seine Handlungsstrategien, um möglichst effiziente und erfolgreiche Entscheidungen zu treffen.

Ein weiterer technischer Aspekt von LAMs ist die Integration von Multi-Modal-Daten. In vielen Anwendungsfällen ist es notwendig, Daten aus unterschiedlichen Quellen wie visuellen Sensoren, akustischen Signalen oder mechanischen Steuerungssystemen zusammenzuführen. LAMs sind in der Lage, solche heterogenen Datenströme zu verarbeiten und auf dieser Grundlage komplexe Entscheidungen zu treffen. Dabei spielen auch Algorithmen zur Merkmalsextraktion und Datenvorverarbeitung eine wichtige Rolle, um sicherzustellen, dass die relevanten Informationen korrekt interpretiert werden.

Die praktische Anwendung von LAMs erfordert eine Kombination aus Modelltraining, Echtzeitdatenverarbeitung und Steuerungssystemen. Das Modell muss in der Lage sein, in annähernd Echtzeit auf eingehende Daten zu reagieren und geeignete Handlungen vorzuschlagen oder direkt auszuführen. Dabei sind sowohl die Genauigkeit als auch die Geschwindigkeit der Entscheidungsfindung von zentraler Bedeutung. Technologisch werden dazu oft spezialisierte Hardwareplattformen wie GPUs oder TPUs verwendet, um die hohen Anforderungen an die Rechenleistung zu erfüllen.

Es sei erwähnt, dass die obigen Beschreibungen von LLMs und LAMs lediglich eine allgemeine und phänomenologische Beschreibung ist und die technischen Details der Funktionsweisen im Detail komplexer ist, dem Fachmann auf dem Gebiet jedoch bekannt sind.

In den folgenden Figuren 3 bis 6 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 3 bis 6 soll nur eine allgemeine Übersicht über Maschinen geben, für welche die angepasste Ausgabe von Meldungen, Steuer- oder Informations-Elementen durchgeführt werden kann.

Figur 3 zeigt eine beispielhafte Anlagenkonfiguration 1000 für PET-Flaschen oder PET-Behälter und Klebegebinde. Wie in Figur 3 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfernen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer 1044 auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

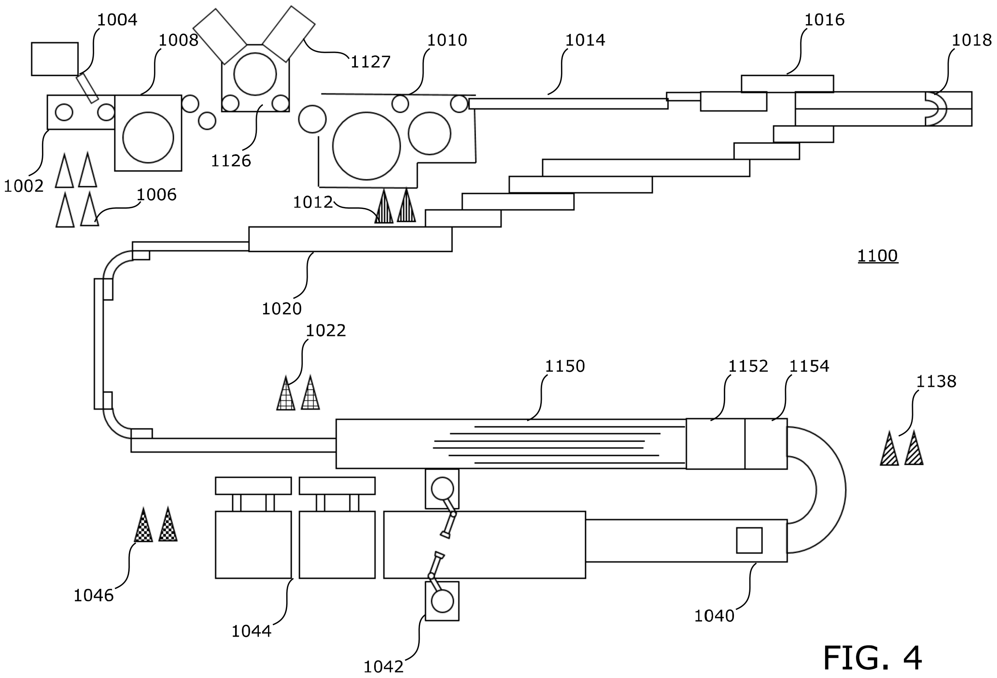

Figur 4 zeigt eine weitere beispielhafte Anlagenkonfiguration 1100 für PET-Behälter und Schrumpfpacker. Die Anlage 1100 aus Figur 4 umfasst viele der Module und Maschinen aus der Anlagenkonfiguration 1000 aus Figur 3, jedoch gibt es einige Unterschiede. Auf die Beschreibung der Module, die bereits in Zusammenhang mit Figur 3 beschrieben sind, wird daher für Figur 4 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

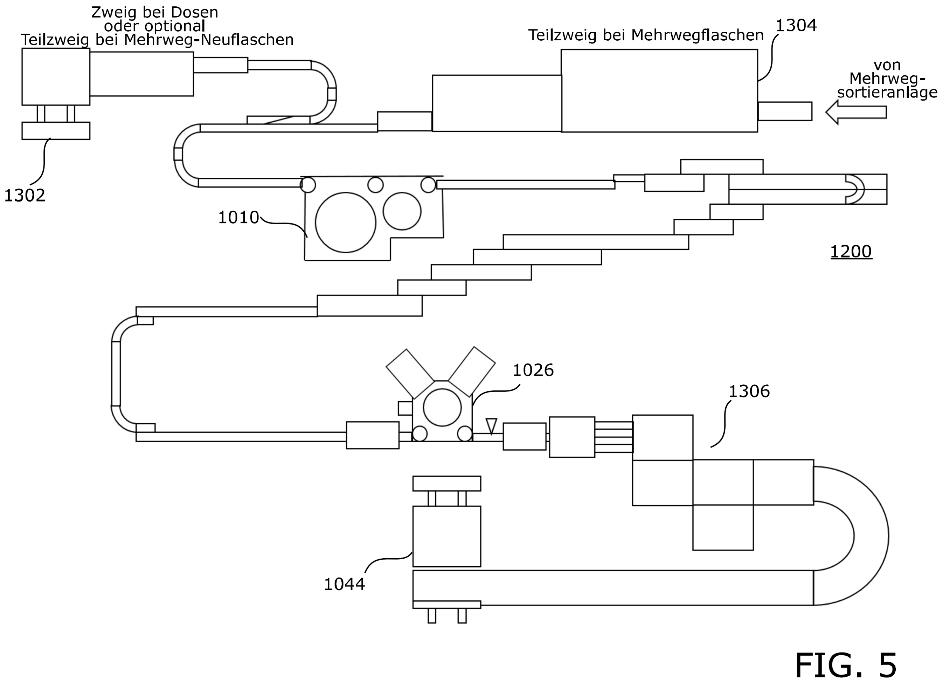

Figur 5 zeigt eine beispielhafte Anlagenkonfiguration 1200 für Dosen oder Glasflaschen. Die beispielhafte Anlagenkonfiguration 1200 aus Figur 5 hat wieder einige Ähnlichkeiten zu den Anlagenkonfigurationen 1000 und 1100 aus Figuren 3 und 4 und die Beschreibung der Anlagenkonfiguration beschränkt sich daher auf die Unterschiede der Anlagenkonfigurationen.

Wie in Figur 5 gezeigt, kann die beispielhafte Anlagenkonfiguration zwei separate Zuführungen umfassen. Eine erste Zufuhr, links in Figur 5, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 5, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

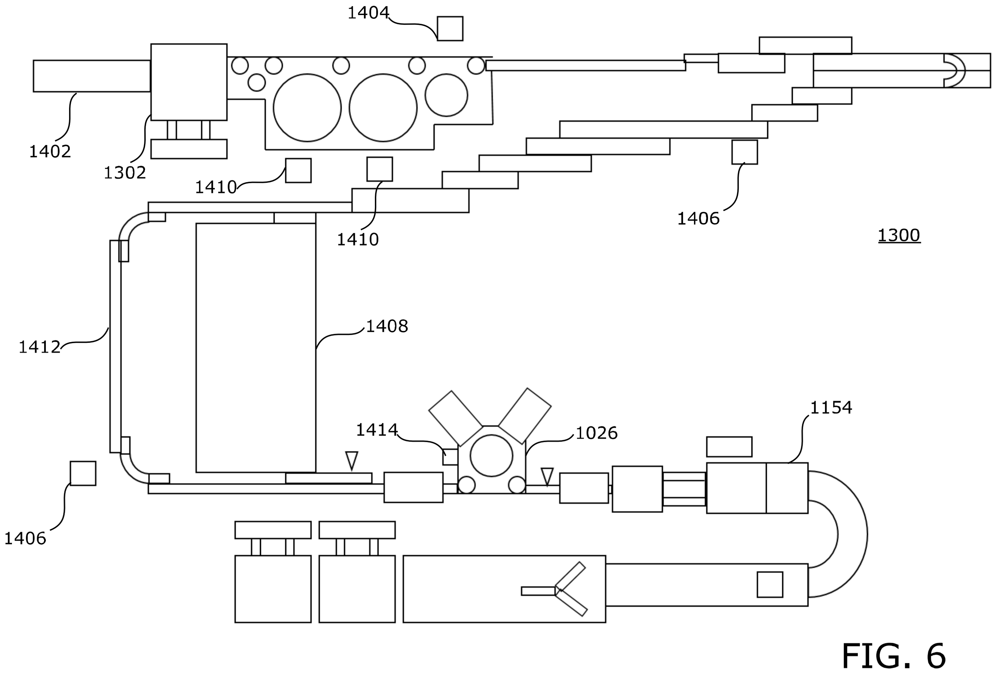

Figur 6 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Computerimplementiertes Verfahren zum automatischen Beheben von Abweichungen an einer Maschinenlinie, insbesondere einer Maschinenlinie zum Abfüllen und Verpacken von Lebensmitteln und/oder Getränken, wobei das Verfahren umfasst:
Überwachen, mittels einer Anlagensteuerung, eines Ist-Zustands der Maschinenlinie, wobei das Überwachen eine Überwachung von einem oder mehreren Parametern der Maschinenlinie umfasst;
Erkennen, mittels der Anlagensteuerung, einer Abweichung des überwachten Ist-Zustands von einem Optimal-Zustand der Maschinenlinie;
Ermitteln, mittels der Anlagensteuerung, einer Reaktions-Maßnahme, die zum Beheben der Abweichung geeignet ist;
Ableiten, mittels einer Large-Action-Model-, LAM-, Einheit von einem oder mehreren Steuerbefehlen aus der Reaktions-Maßnahme;
Ausführen, mittels der LAM-Einheit, des einen oder der mehreren Steuerbefehle an der Maschinenlinie, um die Abweichung zu beheben oder zu minimieren;
Senden von Eingriffsinformationen an eine Large-Language-Model-, LLM-, Einheit; und
Verarbeiten der Eingriffsinformationen durch die LLM-Einheit, wobei die Verarbeitung durch die LLM-Einheit eine Erzeugung einer Meldung über die Abweichung und die Reaktions-Maßnahme umfasst.

2. Verfahren nach Anspruch 1, wobei die Eingriffsinformationen umfassen:
Informationen bezüglich der Abweichung vom Ist-Zustand;
Informationen bezüglich der Reaktions-Maßnahme; und
Informationen bezüglich des abgeleiteten und durchgeführten einen oder mehrerer Steuerbefehle.

3. Verfahren nach Anspruch 1 oder 2, wobei die Anlagensteuerung eine Künstliche-Intelligenz-, KI-, Einheit umfasst, und wobei die KI-Einheit ein neuronales Netz umfasst, das darauf trainiert ist, eingehende Daten von der Maschinenlinie auszuwerten und die Abweichung vom Optimal-Wert zu erkennen.

4. Verfahren nach einem der Ansprüche 1 bis 3, wobei sich der Optimal-Wert aus Sensormesswerten in der Maschinenlinie, Produktdaten bezüglich eines herzustellenden Produkts, und Umgebungsbedingungen bezüglich der Maschinenlinie definiert.

5. Verfahren nach einem der Ansprüche 1 bis 4, wobei die LLM-Einheit die Meldung an einen Bediener der Maschinenlinie ausgibt, nachdem die LAM-Einheit den einen oder die mehreren Steuerbefehle ausgeführt hat, und wobei die Meldung eine Meldung in Text-, Bild-, Bewegtbild-, und/oder Audioformat oder eine Kombination daraus ist.

6. Verfahren nach einem der Ansprüche 1 bis 5, wobei die Überwachung des Ist-Zustands eine Überwachung mittels Sensoren und/oder von einem oder mehreren Maschinenzuständen von Maschinen in der Maschinenlinie umfasst, und wobei die überwachten Parameter wenigstens eines umfassen von:
einer Temperatur an einer Maschine der Maschinenlinie;
einem Druck an einer Maschine der Maschinenlinie;
einem Durchfluss an einer Maschine der Maschinenlinie;
einer Temperatur eines abzufüllenden Getränke-Produkts;
einer Viskosität eines abzufüllenden Getränke-Produkts;
eines CO₂-Gehalts eines abzufüllenden Getränke-Produkts;
einer Temperatur einer Umgebung der Maschinenlinie;
eines Drucks, insbesondere eines Luftdrucks der Umgebung; und/oder
einer Luftfeuchtigkeit der Umgebung der Maschinenlinie.

7. System zum automatischen Beheben von Abweichungen an einer Maschinenlinie, insbesondere einer Maschinenlinie zum Abfüllen und Verpacken von Lebensmitteln und/oder Getränken, wobei das System umfasst:
eine Maschinenlinie;
eine Mensch-Maschine-Schnittstelle, HMI;
eine Anlagensteuerung zum Steuern der Maschinenlinie und zum Auslesen von Daten aus der Maschinenlinie, wobei die Anlagensteuerung angepasst ist zum:
Überwachen eines Ist-Zustands der Maschinenlinie, wobei das Überwachen eine Überwachung von einem oder mehreren Parametern der Maschinenlinie umfasst,
Erkennen einer Abweichung des überwachten Ist-Zustands von einem Optimal-Zustand der Maschinenlinie, und
Ermitteln einer Reaktions-Maßnahme, die zum Beheben der Abweichung geeignet ist,
eine Large-Action-Model-, LAM-, Einheit, die angepasst ist zum:
Ableiten von einem oder mehreren Steuerbefehlen aus der Reaktions-Maßnahme, und
Ausführen des einen oder der mehreren Steuerbefehle an der Maschinenlinie, um die Abweichung zu beheben oder zu minimieren, und
eine Large-Language-Model-, LLM-, Einheit, die angepasst ist zum:
Verarbeiten der Eingriffsinformationen, wobei die Verarbeitung eine Erzeugung einer Meldung über die Abweichung und die Reaktions-Maßnahme umfasst.

8. System nach Anspruch 7, wobei die LLM-Einheit des Weiteren angepasst ist zum:
Ausgeben der Meldung an einen Bediener der Maschinenlinie, nachdem die LAM-Einheit den einen oder die mehreren Steuerbefehle ausgeführt hat, und wobei die Meldung eine Meldung in Text-, Bild-, Bewegtbild-, und/oder Audioformat oder eine Kombination daraus ist.

9. Computerlesbares Speichermedium mit darauf aufgezeichneten Programmanweisungen, die, wenn sie von wenigstens einer Computervorrichtung ausgeführt werden, die wenigstens eine Computervorrichtung konfigurieren zum:
Überwachen, mittels einer Anlagensteuerung, eines Ist-Zustands der Maschinenlinie, wobei das Überwachen eine Überwachung von einem oder mehreren Parametern der Maschinenlinie umfasst;
Erkennen, mittels der Anlagensteuerung, einer Abweichung des überwachten Ist-Zustands von einem Optimal-Zustand der Maschinenlinie;
Ermitteln, mittels der Anlagensteuerung, einer Reaktions-Maßnahme, die zum Beheben der Abweichung geeignet ist;
Ableiten, mittels einer Large-Action-Model-, LAM-, Einheit von einem oder mehreren Steuerbefehlen aus der Reaktions-Maßnahme;
Ausführen, mittels der LAM-Einheit, des einen oder der mehreren Steuerbefehle an der Maschinenlinie, um die Abweichung zu beheben oder zu minimieren;
Senden von Eingriffsinformationen an eine Large-Language-Model-, LLM-, Einheit; und
Verarbeiten der Eingriffsinformationen durch die LLM-Einheit, wobei die Verarbeitung durch die LLM-Einheit eine Erzeugung einer Meldung über die Abweichung und die Reaktions-Maßnahme umfasst.

10. Computerlesbares Speichermedium nach Anspruch 9, wobei die LLM-Einheit die Meldung an einen Bediener der Maschinenlinie ausgibt, nachdem die LAM-Einheit den einen oder die mehreren Steuerbefehle ausgeführt hat, und wobei die Meldung eine Meldung in Text-, Bild-, Bewegtbild-, und/oder Audioformat oder eine Kombination daraus ist.
